# EUROPEAN PATENT APPLICATION

(11) **EP 4 738 854 A1**
(43) Date of publication of application: **06.05.2026**
(21) Application number: 24210060.0
(22) Date of filing: 31.10.2024
(51) Int. Cl.: H04N 23/45, H04N 23/60

(54) **METHOD FOR SYNCHRONIZATION OF FRAME-BASED AND EVENT-BASED SENSORS**

(71) Applicant: Prophesee, 75012 Paris (FR)
(72) Inventor: KHAMOUMA, Ayman, 94270 LE KREMLIN BICETRE (FR); GOUAULT, Jonathan, 95300 PONTOISE (FR); CHOTARD, Ludovic, 38120 SAINT-EGREVE (FR); SCHWAMBACH, Vitor, 38000 GRENOBLE (FR)
(74) Representative: Regimbeau

(57) **Abstract**

Method for synchronization of a frame-based sensor (3) and an event-based sensor (2), implemented by a processor (1) configured to receive a frame stream from the frame-based sensor (3) and an event data stream from the event-based sensor (2), the event data stream comprising events generated each time the event-based sensor (2) detects a change in light intensity, wherein the frame-based sensor (3) comprises a synchronizing pin (31) configured to emit a pulse at a start of acquisition of each frame of the frame stream, and wherein the event-based sensor (2) comprises a trigger input pin (21) connected to the synchronizing pin (31), wherein the event-based sensor (2) is configured to detect the pulse emitted by the synchronizing pin (31) on the trigger input pin (21), and to insert an associated trigger event in the event data stream in response to the detection of the pulse, the method comprising the steps of:
- storing frames from the frame-based sensor in a queue of frames (Qf), a frame being characterized by a frame indicator reflecting an order of the frame in the frame stream,
- storing event data slices (Eds) in a queue of event data slices (Qe), an event data slice (Eds) comprising events from the event data stream generated during a time interval between two successive trigger events and a slice indicator reflecting an order of the event data slice (Eds) in the event data stream,
- for each frame of the queue of frames (Qf), generating a synced data slice (Sds) comprising the frame and event information identifying all event data slices (Eds) comprising events generated during acquisition of the frame, by comparing the frame indicator and the respective slice indicators of event data slices (Eds).

## Description

### SUMMARY OF THE INVENTION

The invention concerns the field of data fusion, and in particular the synchronization between image data from event-based and frame-based sensors.

### TECHNICAL FIELD AND PRIOR ART

When realizing data fusion from different sensors, it is important to synchronize the data transmitted to a processor. For instance, a dual camera system comprising at least one event-based sensor and one frame-based sensor and a downstream processor, such as a system-on-chip (or SoC) can be used for data fusion and enhancement. Such systems find applications for snapshot deblur, video deblur or offline on-demand slow-motion. Interestingly, the information from the event data stream generated by the event-based sensor can be used to correct the motion blur observed in frames from the frame-based sensor acquired during long exposure snapshots, especially at low light.

For these applications to be successful, it is important that the two data streams are well synchronized, preferably down to microsecond precision.

Processing and data fusion of data streams coming from event-based sensors and frame-based sensors is a difficult task.

Usually, frame-based sensors used in multi-sensor systems, such as stereo systems, provide a mechanism for synchronization. Typically, one sensor is a master and emits a synchronization pulse at the start of exposure of each frame, on a dedicated pin. A slave sensor then uses the synchronization signal as a trigger to start its frame exposure period. This way both master and slave sensors produce the same number of frames, each with an aligned frame counter that allows for synchronization by the downstream processor.

Alternatively, frame-based sensors also often count with a flash strobe signal that is used to trigger a flash at the start of acquisition of a frame. Said flash strobe signal can also be used as a synchronization pulse.

The processor synchronizes the received frames from multiple cameras by aligning the frame counters in the metadata at the start of each frame. Additionally, the frame counters can be used to detect and correct any eventual data loss, thus keeping synchronization.

Frame-based sensors read-out frames sequentially, so that the frames are transmitted every operative period or frame period. Synchronization is particularly complex in the case of data fusion with frame-based sensors of rolling-shutter type, where there can be overlap between the acquisition of two frames.

On the other hand, event-based sensors do not capture images using a shutter as conventional frame-based sensors. Instead, each pixel of the event-based sensor operates independently and asynchronously, responding to local changes in brightness or light intensity as they occur. This allows event-based sensors to have a very high temporal resolution, of the order of a microsecond.

Also, the event-based sensors can monitor an input pin and generate time-stamped trigger events in the event data stream that convey the time and value of said input pin upon level changes.

Unlike the frame-based sensor, the event-based sensor does not transmit the data corresponding to one image frame sequentially but provides data continuously. To match standard transmission protocols, the event data stream must be decomposed in a plurality of event frames at regular intervals. Typically, an arbitrary frame period is implemented. The event data stream transmitted by the event-based sensor is split into a plurality of event frames, storing data generated during the arbitrary frame period.

However, the arbitrary frame period is not necessarily aligned with the operative period at which the frame-based sensor transmits frames. Even when specifically implementing the arbitrary frame period to match the operative period, there might be slight variations in the operative period that leads to desynchronization, for instance due to jitter and minor frame period variations due to exposure time changes. A fixed implementation of the arbitrary frame period is then not sufficient to ensure proper synchronization.

Moreover, during the transmission and processing, data loss can occur. It is then important for the processor to continue to monitor the synchronization and apply corrective action if needed, so that the streams maintain synchronization even if data loss occurs in one or both data streams.

### SUMMARY OF THE INVENTION

The invention provides a synchronization method that allows to synchronize information from a frame-based sensor and an event-based sensor, that is robust and capable of recovering from data losses. In particular, the processor can obtain for each frame the corresponding events spanning the entire exposure window of the frame from the frame-based sensor.

The aforementioned problem is solved by a method for synchronization of a frame-based sensor and an event-based sensor, implemented by a processor configured to receive a frame stream from the frame-based sensor and an event data stream from the event-based sensor, the event data stream comprising events generated each time the event-based sensor detects a change in light intensity, wherein the frame-based sensor comprises a synchronizing pin configured to emit a pulse at a start of acquisition of each frame of the frame stream, and wherein the event-based sensor comprises a trigger input pin connected to the synchronizing pin, wherein the event-based sensor is configured to detect the pulse emitted by the synchronizing pin on the trigger input pin, and to insert an associated trigger event in the event data stream in response to the detection of the pulse, the method comprising the steps of:
- storing frames from the frame-based sensor in a queue of frames, a frame being characterized by a frame indicator reflecting an order of the frame in the frame stream,
- storing event data slices in a queue of event data slices, an event data slice comprising events from the event data stream generated during a time interval between two successive trigger events and a slice indicator reflecting an order of the event data slice in the event data stream,
- for each frame of the queue of frames, generating a synced data slice comprising the frame and event information identifying all event data slices comprising events generated during acquisition of the frame, by comparing the frame indicator and the respective slice indicators of event data slices.

The proposed method provides a solution for synchronization of the data streams coming from the event-based sensor and the frame-based sensor. The synchronization is based solely on the frame indicator and the slice indicator, that can be associated with the trigger events. The method allows for efficient synchronization so only a lightweight decoding of the event data stream is necessary. It does not require the event-based sensor to provide a trigger counter or to send frames in a specific protocol.

Additionally, it provides a means of decomposing the event data stream into event data slices that match the frame exposure period, for each frame generated by the frame-based sensor frame. This is especially relevant for rolling-shutter type frame-based sensors.

The event data slices relative to each frame from the frame-based sensor can be extracted to be provided to a data fusion application.

It can establish correct synchronization from the start and maintains synchronization even in the presence of data loss.

The invention is advantageously supplemented by the following features, taken individually or in any of their technically feasible combinations:
- The frame indicator is generated by the processor and added to the frame as a metadata of the frame, before storing the frame in the queue of frames.
- The event information comprises pointers to a start event and an end event of the respective event data slices comprising events generated during acquisition of the frame.
- The method comprises a step of decomposition of the event data stream into a plurality of event data slices, the decomposition being implemented by the processor.
- The frame-based sensor comprises a frame counter, whose frame counter value is incremented at each frame generation by the frame-based sensor, and the method further comprises a continuity check on the frame counter value upon storing a new frame in the queue of frames, based on a comparison between the frame indicator of the new frame and the frame indicator of a last frame from the queue of frames.
- The processor communicates with an application, and the method further comprises a warning step of sending a notification to the application if the continuity check identifies a frame loss.
- The generated synced data slice is stored in a buffer.
- The frame-based sensor is of rolling-shutter type.
- All generated synced data slices are stored in a buffer, each synced data slice is associated with a timestamp that corresponds to a start of acquisition, the frame-based sensor generating frames comprising a number h of lines, each line being acquired during a row exposure time and delayed by a row skew time from the previous line, and the method further comprises fetching a timed synced data slice by:
   - computing, for the timed synced data slice, an expected end of frame acquisition from the start of acquisition, the row exposure time, the number of lines and the row skew time;
   - searching in the buffer a next synced data slice corresponding to the first synced data slice associated with a timestamp greater than the expected end of frame acquisition;
   - if the next synced data slice is found, creating a set of synced data slices comprising the timed synced data slice and the synced data slices anterior to the next synced data slice.
- The frame-based sensor comprises a frame counter whose frame counter value is incremented at each frame generation by the frame-based sensor and the frame-based sensor is configured to transmit a first frame associated with a first frame counter value, and the method further comprises an initialization step of removing a number of event data slices from the event data slices queue equal to the first frame counter value.
- The method further comprises a step of comparison of the respective slice indicator of a first and a second event data slice from the queue of event data slices, and removing, or not, the first event data slice from the queue of data event slices, based on the comparison.
- The method further comprises, upon generation of the synced data slice, a step of removing a frame from the queue of frames or an event data slice from the queue of event data slices, based on the comparison between the frame indicator of the frame and the slice indicator of the event data slice.
- The processor communicates with an application, and the method further comprises a warning step of:
   - sending a notification to the application, each time an event data slice is removed from the queue of data event slices;
   - sending a notification to the application, each time a frame is removed from the queue of frames.
- The event data stream is decomposed by the event-based sensor into event frames comprising events generated during an arbitrary frame period, each event being associated with a timestamp, and the method further comprises a generation of event data slices from at least a first event frame with a first event, by the processor, wherein the slice indicator corresponds to an event timestamp corresponding to the timestamp of the first event of the first event frame.
- The frame indicator corresponds to a timestamp generated by the frame-based sensor, the queue of frames comprises a head frame and the queue of event data slices comprises a head event data slice, and the method further comprises the steps of:
   - computing a time difference between the timestamp of the head frame and the event timestamp of the head event data slice to obtain a head offset value;
   - computing a difference value representative of a time difference between an offset reference value and the head offset value;
   - if the difference value is positive and greater than a time margin, removing the head event data slice from the queue of event data slices;
   - if the difference value is negative and less than a time margin, removing the head frame from the queue of frames;
   - else, generating a new synced data slice from the head frame and the head event data slice, and removing the said head frame and head event data slice from the frame queue and queue of event data slices, respectively.
- The method comprises the step of updating the offset reference value to the head offset value upon generation of the new synced data slice.
- The method comprises a frame counter whose frame counter value is incremented at each frame generation by the frame-based sensor, and a trigger counter whose value is incremented each time the pulse is detected on the trigger input pin of the event-based sensor, the slice indicator corresponding to an index computed from the trigger counter and the frame indicator corresponding to the frame counter value, the step of generating the synced data slice being based on a comparison between the index and the frame counter value.
- The method further comprises the steps of:
   - pulling a head frame and a head event data slice from the respective queues;
   - comparing the index of the head event data slice and the frame counter value of the head frame;
   - if the index and the frame counter value are equal, generating a new synced data slice from the frame and the event data slice;
   - if the index is greater than the frame counter value, removing the head frame from the queue of frames;
   - if the frame counter value is greater than the index, removing the head event data slice from the queue of event data slices.
- The event-based sensor is configured according to a MIPI CSI2 protocol, such that event data slices are generated from the event data stream by the event-based sensor before transmission to the processor.

The invention also concerns a system comprising a frame-based sensor, an event-based sensor, and a processor, wherein the processor is configured to implement the method for synchronization described above for synchronizing the frame-based sensor and the event-based sensor.

In another aspect of the invention, is proposed a non-transitory computer-readable medium comprising instructions stored thereon which, when executed by the system described above, cause the computer to carry out the steps of the method for synchronization.

### BRIEF DESCRIPTION OF THE DRAWINGS

Figure 1 is a schematic representation of the system in an embodiment.
Figure 2 is an illustration of frame acquisition of a frame-based sensor in rolling shutter type.
Figure 3 is a schematic representation of a decomposition of the event data stream in a first configuration.
Figure 4 is a schematic representation of a decomposition of the event data stream in a second configuration.
Figure 5 is an organigram showing the step of the synchronization method in an embodiment.
Figure 6 is a schematic representation of the implementation of a method for synchronization in another embodiment.
Figure 7 a schematic representation of a decomposition of the event data stream in a third configuration.

### DETAILED DESCRIPTION OF EMBODIMENTS

In this disclosure, the terms "line" or "row" refer to a dimension accessed by a pixel on a frame.

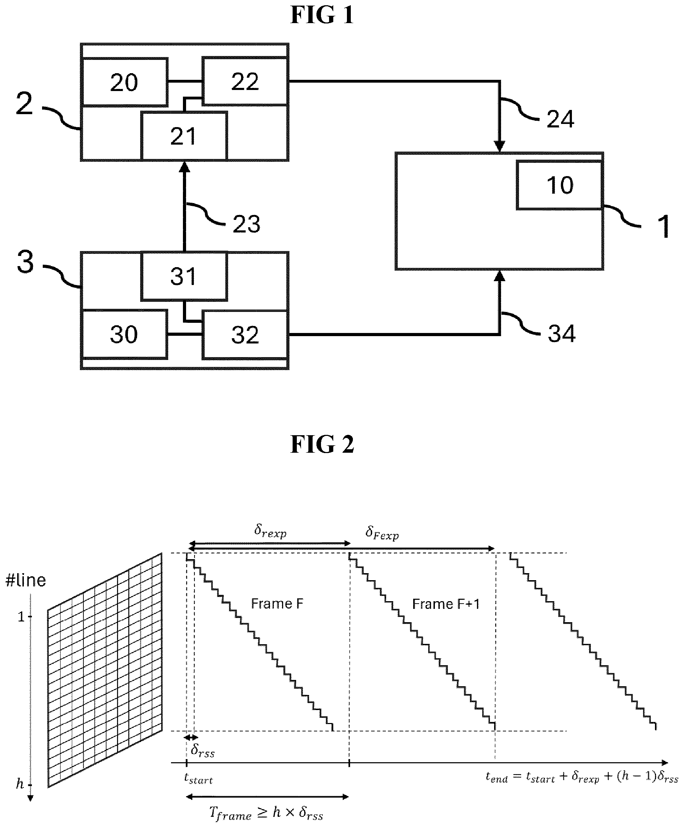

As illustrated in Figure 1, the system comprises a processor 1, an event-based sensor 2 and a frame-based sensor 3. The event-based sensor 2 and the frame-based sensor 3 are configured to acquire images from the same scene, in front of the system. The event-based sensor 2 and the frame-based sensor 3 are, for instance, cameras.

The synchronization of the frame-based sensor 3 and event-based sensor 2 is implemented by the processor 1. As will be described in more details later, the proposed method for synchronization aims at synchronizing events generated by the event-based sensor 2 with the frames generated by the frame-based sensor 3. It is an enabler for data fusion algorithms to augment the image information contained in the frames with movement information from the events, or to provide efficient deblurring, for instance.

The processor 1 can be a microprocessor as a system-on-chip (SoC) integrated circuit. The processor 1 operates downstream the frame-based sensor 3 and the event-based sensor 2. In other words, the processor 1 is configured to receive a frame stream from the frame-based sensor 3 and an event data stream from the event-based sensor 2, the event data stream comprising events generated each time the event-based sensor detects a change in light intensity. The processor 1 communicates with a memory. The memory is configured to store the instructions for synchronizing the sensors 2,3 and to store the received frames and generated data.

### Frame-based sensor

The frame-based sensor 3 acquires images of a scene and transmits frames. In reference to figure 1, it comprises a sensor circuit 30 with a plurality of pixels configured to acquire a frame, that is an image. The frame-based sensor 3 comprises a serial communication bus 34, for connection to the downstream processor 1. Preferably, the serial communication bus 34 comprises an inter-integrated circuit (or I2C) interface.

After acquisition of the frame, the frame is transmitted to a read-out circuit 32, which transfers the data stream to the bus 34 for further processing. The data stream is preferably transmitted in a unidirectional way.

The read-out circuit 32 may comprise a frame formatter. Preferably, the frame-based sensor 3 comprises a MIPI CSI2 ("Camera Serial Interface") data streaming interface for transmitting the frame data stream, or frame stream to the processor 1 according to the MIPI CSI2 communication protocol herein described.

As known per se, the MIPI CSI2 interface is a widely adopted high-speed protocol for transmitting a frame stream from the frame-based sensor 3. Preferably, the read-out circuit 32 formats the data acquired by the sensor circuit 30 so that the frame-based sensor 3 produces a MIPI CSI2 stream. For instance, the frame stream is decomposed into a plurality of long packets (LP) containing the image data delimited by Frame Start (frame start) and Frame End (frame end) short packets (SP). A packet is a group of four or more bytes organized in a specified way to transfer data across the interface.

Each frame may be associated with metadata. As seen later, the metadata may include a frame indicator, reflecting an order of the frame in the frame stream. For instance, it can be a unique identifier or frame counter and/or a unique timestamp, which corresponds to the start of exposure *tₛₜₐᵣₜ* of the frame. The read-out circuit 32 may provide the frame start short packet, optionally followed by one or more long packets containing metadata.

The frame start short packet and optional metadata long packets are then followed by one or more long packets containing image data or frames. In the CSI2 protocol, the long packet comprises a 32-bit Packet Header (PH) and a 16-bit Packet Footer (PF). The packet header comprises an 8-bit Data Identifier, a 16-bit Data Field, and a 6 to 8-bit Error Correction Code (ECC). The data identifier comprises the data type, which determines the encoding of the packet and its payload. In long packets' header the data field contains a word count, that determines the number of bytes in said packet's payload. In frame start and frame end short packets, the 16-bit data field may correspond for instance to the frame number.

Typically, the frame-based sensor produces one long packet for each line of the frame-based sensor 3, each frame being composed of *h* lines. Optional line start (LS) and line end (LE) short packets can delimit long packets of a given line. In said LS and LE short packets, the data field can convey the line number.

The ECC byte allows single-bit errors to be corrected and 2-bit errors to be detected, in the short packet or in the packet header of the long packet, respectively. To detect possible errors in transmission, a checksum is calculated over each long packet. A 16-bit checksum sequence is transmitted as part of the packet footer to the processor 1. It allows for error detection and correction. More precisely, the read-out circuit 32 may comprise cyclic redundancy check (CRC) circuitry. For instance, at the beginning of each long packet, a cyclic redundancy check (CRC) shift register is initialized. After all payload data has passed through a CRC circuitry, the CRC circuitry contains the checksum. The checksum equals the final contents of the shift register and is then sent over CSI-2 bus 34 to the processor 1 to verify that no errors have occurred in the transmission. Such CRC or checksum allows the receiver to detect bit errors in the data payload. In case of errors, corrective action can be taken by the receiver processor, such as, for instance, discarding the entire frame.

The transmission refers to the time during which high-speed serial data is actively traversing the serial communication bus 34. A transmission is comprised of one or more packets. A transmission is bounded by a start of transmission (SoT) and an end of transmission (EoT) at beginning and end, respectively.

MIPI CSI2 standard establishes a maximum packet size of 64KB. Preferably, the size of a long packet containing frames may be limited to 8KB as a trade-off between the size of the buffers and blanking overheads.

The frame-based sensor 3 comprises a synchronizing pin 31. The synchronizing pin 31 is configured to emit a pulse at a start of acquisition of the frame, for each frame of the frame stream. Preferably, the synchronizing pin 31 is a synchronization pin, also known as XVS pin (which stands for external Video Synchronization pin), or alternatively a flash strobe pin configured to issue a pulse at the start of acquisition for each frame it acquires.

The frame-based sensor 3 transmits a frame to the processor 1 regularly, at a given operative period. The receiving processor 1 can operate the frame-based sensor 3 in two modes of operation, the Low-Frame Rate (LFR) mode and the High Frame Rate (HFR) mode. The frame rate corresponds to an operative frequency at which the frames are transmitted, that is the inverse of the operative period.

When the processor 1 operates the frame-based sensor 3 in LFR mode, it receives frames from the frame-based sensor 3 at an operative frequency comprised between 10fps to 100fps, typically 30fps. In LFR mode, each frame from the frame-based sensor 3 is handled individually by the downstream processor 1 and generates a callback to the application running on said processor 1. The application may therefore receive the frame counter for each frame.

When the processor 1 operates the frame-based processor 3 in HFR mode, it receives frames from the frame-based sensor 3 at an operative frequency typically comprised between 100fps and 500fps, for example 120fps. In HFR mode, the processor 1 handles frames in batches of a fixed number of frames N corresponding to the batch size N. Typically, a batch contains N=8 frames. The processor 1 generates a single callback to the application containing the N frames in a batch.

Each batch may be associated to a single metadata, which corresponds to the metadata of the first frame in the batch. Therefore, only the frame counter of the first frame is available for the application in processor 1. The HFR mode allows the processor 1 to handle the frame-based sensor 3 data at operating at a higher frequency but renders the detection of data loss more difficult. Indeed, if a frame is lost in the middle of the batch, the application in processor 1 could only detect it at the reception of the next batch, typically using the frame counter for the first frame of the next batch. For instance, when no data loss occurs, the difference between the frame counters for two successive batches corresponds to the batch size N. If the difference is superior to the batch size N, it means that frames have been lost. For example, if N=8 and the difference is 9, it means that one frame has been lost.

The processor 1 receiving the frame stream may require a minimum delay during data transmission, known as the blanking period. The blanking period corresponds to an idle time observed between two consecutive lines (horizontal blanking) or two consecutive frames (vertical blanking), on which the processor 1 receiving the frame stream might have minimum delay requirements.

The frame-based sensor 3 may be of global-shutter type or of rolling-shutter type.

Preferably, the frame-based sensor 3 is of rolling shutter type. Frame-based sensors of rolling-shutter type are common in mobile phones or embedded applications.

In this case, the sensor circuit 30 exposes and then transmits to the read-out circuit 32 individual lines (or rows) of the frame sequentially. In other words, the frame is recorded line by line and not entirely captured at once. For instance, the rolling-shutter type frame-based sensor 3 exposes one line of pixels at a time, from the top of the image to the bottom, so the top of the frame is recorded slightly earlier than the bottom. It is schematically illustrated in Figure 2. Each single line is exposed during a row exposure time *δᵣₑₓₚ.* Each line takes a certain amount of time to read out, for instance 10µs, known as the rolling-shutter skew *δᵣₛₛ*. Therefore, the exposure windows of consecutive lines are staggered in time and the resulting frame features a small time-delay equal to *δᵣₛₛ* between each line, that is a small time interval between the start of exposure of two consecutive lines. The rolling-shutter skew *δᵣₛₛ*, or row skew time, multiplied by the number of lines, or height h of the frame gives the 'frame period'. The 'frame acquisition time' *δ_{FeXp}* corresponds to the delay between the start of exposure of the top line, and the read out or end of exposure of the bottom line. The frame period (or operative period) T_{frame} corresponds to the delay between the beginning of exposure of the top line of frame F and the beginning of exposure of the next frame F+1. Consequently, there can be overlap between the acquisition of two consecutive frames F and F+1. In a standard rolling-shutter type frame-based sensor, the overlap is bounded up to two frames. Indeed, only a single exposure measurement can be taken before it is read-out, and the read-out occurs sequentially.

In an embodiment where the frame-based sensor 3 is of roller shutting type, the metadata may also contain information about the row exposure time *δₓₚ* and/or the rolling-shutter skew *δᵣₛₛ* used to acquire one line of the frame.

### Event-based sensor

In reference to figure 1, the event-based sensor 2 comprises a sensor circuit 20 with a plurality of pixels, comprising a photoreceptor circuit and a change detector.

The event-based sensor 2 comprises a serial communication bus 24, for connection to the downstream processor. Preferably, the serial communication bus is an inter-integrated circuit (or I2C) interface or bus.

The event-based sensor 2 comprises a read-out circuit 22 coupled to the sensor circuit 20, configured to receive data from the sensor circuit 20, and to transfer an event data stream to the serial communication bus 24 for further processing by the processor 1.

Preferably, the event-based sensor 2 comprises a MIPI CSI2 interface to transmit the event data stream to the downstream processor 1 using the standard protocol described above.

As previously explained, the event-based sensor 2 does not transmit the data corresponding to one frame sequentially but provides data continuously. Therefore, unlike the frame-based sensor 3, the event-based sensor 2 may not send metadata containing a frame counter.

To match the MIPI CSI2 standard, which imposes the decomposition of the data stream in frames, an arbitrary decomposition of the event data stream may be implemented. For instance, the read-out circuit 22 comprises an event-data formatter, which encodes the received event data stream into event frames.

Preferably, the event data stream is decomposed by the event-based sensor 2 into event frames comprising events generated during an arbitrary frame period, each event being associated with a timestamp. As explained in more details below, the method then comprises a generation of event data slices from at least a first event frame with a first event, by the processor. Each event data slice is associated with a slice indicator, for instance with an event timestamp corresponding to the timestamp of the first event of the first event frame.

In other words, an event frame is transmitted to the processor 1 every arbitrary frame period. That is, the event data stream transmitted by the event-based sensor 2 is split into a plurality of event frames, containing data generated during the arbitrary frame period. Typically, each event frame comprises data corresponding to a concatenation of events detected by the sensor circuit 20.

Preferably, the read-out circuit 22 formats the event frame such that each event frame comprises a unique identifier, for instance an event frame counter or timestamp.

Each event frame further comprises a capacity, that corresponds to the maximum length of the event frame. All event frames may have the same capacity. The maximum capacity is determined by the amount of data transferred in the frame period considering maximum streaming bandwidth of the event-based sensor 2.

Preferably, each event frame comprises a size, which corresponds to the current length of the event frame and is updated when new events are detected by the event-based sensor 2.

The event-based sensor 2 preferably comprises an internal clock with a time base. The read-out circuit 22 may use the time base to associate a timestamp to the event frame. Alternatively, the event-based sensor 2 may associate each event of the event frame with a timestamp corresponding to the moment when a given pixel detects a change of illumination or brightness. Then, the timestamp of the event frame can be the timestamp of the first event contained in the event frame. More generally, the event frame does not contain information from one line of a frame but events occurring on different lines of a frame might be mixed up in the event frame.

The event-based sensor 2 further comprises an external trigger mechanism that allows it to monitor a trigger input pin 21, configured to detect the pulse emitted by the synchronizing pin 31. The pulse may be transferred via a bus 23.

Each time the state of the trigger input pin 21 changes, the read-out circuit 22 may insert a trigger event in the event data stream transmitted to the processor 1. The trigger event can be timestamped using the time base of the event-based sensor 2 at the moment the change of state of the trigger input pin 21 is detected.

More generally, the trigger input pin 21 is connected to the synchronizing pin 31 and the event-based sensor 2 is configured to detect the pulse emitted by the synchronizing pin 31 on the trigger input pin 21, and to insert an associated trigger event in the event data stream in response to the detection of the pulse.

Preferably, the event-based sensor 2 can monitor a plurality of pins. The trigger event might encode information identifying which pin was at the origin of the detected pin state change.

### Synchronization of event-based sensor and frame-based sensor

The selection of the arbitrary frame period for the event-based sensor 2 results in a compromise. For instance, in an embodiment where the event-based sensor 2 follows the MIPI CSI2 protocol, selecting a large arbitrary frame period minimizes overheads incurred for inserting frame start and frame end short packets, and the blanking period required by the processor 1, but as a counterpart leads to a higher number of long packets and a larger latency of the processor 1.

As a result, the arbitrary frame period is not necessarily aligned with the operative period at which the frame-based sensor 3 transmits frames. Also as already mentioned, even when specifically implementing the arbitrary frame period to match the operative period, there might be slight variations in the operative period that leads to desynchronization. Indeed, depending on the type of metadata transmitted, the operative period might show slight variations that would render a fixed implementation of the arbitrary frame period useless.

The proposed method aims at synchronizing the frame-based sensor 3 and the event-based sensor 2. For instance, it aims at synchronizing event frames transmitted by the event-based sensor 2 and the frames transmitted by the frame-based sensor 3. Indeed, to apply data fusion algorithms, the processor 1 requires determining which of the events transmitted by the event-based sensor 2 occurred during the operative period.

The proposed method comprises the steps of:
- storing frames from the frame-based sensor 3 in a queue of frames Qf, a frame being characterized by a frame indicator reflecting an order of the frame in the frame stream,
- storing event data slices in a queue of event data slices Qe, an event data slice comprising events from the event data stream generated during a time interval between two successive trigger events and a slice indicator reflecting an order of the event data slice in the event data stream,
- for each frame of the queue of frames, generating a synced data slice comprising the frame and event information identifying all event data slices comprising events generated during acquisition of the frame, by comparing the frame indicator and the respective slice indicators of event data slices.

Identifying which events happen during the operative period is particularly difficult for the frame-based sensor 3 of rolling-shutter type. Indeed, due to the rolling-shutter skew *δᵣₛₛ*, the event frame might span two successive frames from the frame-based sensor 3 simultaneously.

### Initialization and set up

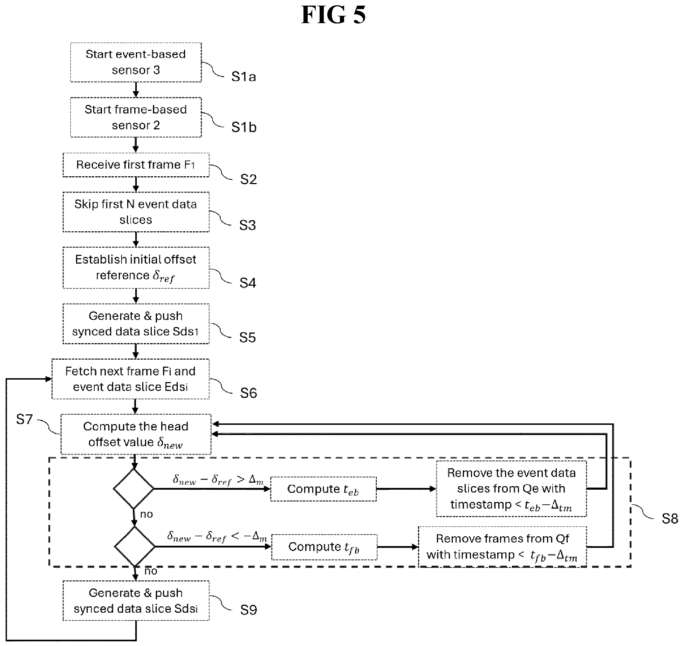

An embodiment of the synchronization method is illustrated in figure 5. The synchronization method is not limited to this embodiment. In particular, some steps are optional and alternative steps can be added without modifying the overall idea of the method.

Before applying the method, the system is preferably configured and set up (step S1).

For instance, the synchronizing pin 31 of the frame-based sensor 3 is connected to the trigger input pin 21 of the event-based sensor 2 using the bus 23. Then, the serial communication bus 34 of the frame-based sensor 3 and the serial communication bus 24 of the event-based sensor 2 are connected to the downstream processor 1.

In an embodiment, the MIPI CSI2 data streaming interface of the frame-based sensor 3 and the MIPI CSI2 data streaming interface of the event-based sensor 2 are connected to the processor 1.

Preferably, before starting a dual sensor data acquisition and fusion, the processor 1 performs a procedure to identify which sensors are connected. Then, the processor 1 might start the event-based sensor 2, before starting the frame-based sensor 3. This ensures that the trigger input pin 21 is ready to capture a first trigger when the synchronizing pin 31 of the frame-based sensor 3 generates a first pulse corresponding to a start of integration of a first frame.

During a step S1a, the event-based sensor 2 is started and configured. The external trigger mechanism of the event-based sensor 2 is enabled so that any pulse received from the synchronizing pin 31 generates a trigger event in the event data stream transmitted by the event-based sensor 2 to the processor 1.

Then, during a step S1b, the frame-based sensor 3 is configured and started. The operative frequency of the frame-based sensor 3 is typically set between 10fps and 500fps, and the row exposure time *δᵣₑₓₚ* is typically set between 2ms and 100ms.

For example, in an embodiment where the processor 1 operates in Low Frame Rate (LFR) mode, the operative frequency of the frame-based sensor 3 is typically equal to 30fps, and the row exposure time *δᵣₑₓₚ* comprised between 10ms and 30ms.

For example, in an embodiment where the processor 1 operates in High Frame Rate (HFR) mode, the operative frequency of frame-based sensor 3 is typically equal to 480fps and the row exposure time *δᵣₑₓₚ* comprised between 1ms and 5ms, for instance 2ms.

The processor 1 starts receiving frames from the frame-based sensor 3 and event frames from the event-based sensor 2. The synchronization method may start after the processor 1 receives the first frame in the frame stream from the frame-based sensor 3 in a step S2, and the event data stream event-based sensor 2.

Preferably, the frame indicator is received by the processor 1 from the frame-based sensor 3 and added to the frame as a metadata of the frame, before storing the frame in the queue of frames Qf. As previously mentioned, the frame indicator may correspond to or comprise a frame counter and/or a timestamp, or more generally any information reflecting a position of the frame in time. It may be stored in the metadata associated with each frame.

### Slicing of the event frames

As already mentioned, in an embodiment where the event-based sensor 2 does not generate event data slices, the processor 1 may first decompose the event data stream transmitted by the event-based sensor 2 into a plurality of event data slices. More precisely, the event frames received by the processor 1 are split or concatenated into event data slices, such that one event data slice comprises only events happening in between two trigger events. In other words, each data slice is associated with a frame F from the frame-based sensor 3.

In an embodiment where the arbitrary frame period is shorter than the operative period, the event frames received by the processor 1 are concatenated, while in an embodiment where the arbitrary frame period is longer than the operative period, the event frames received by the processor 1 are split. In this case, the event frames are divided into multiple event data slices, each containing only a portion of the event frame.

To generate an event data slice Eds, a first solution could be to actively copy all the events from the event frames into a single buffer for each event data slice. However, it might not be efficient. In the case where the frame-based sensor 3 is of rolling-shutter type, it might lead to copy some events multiple times, for instance two times, if the event frame spans over multiple frames. Copying the events requires to allocate a new memory location and actively copy data iteratively to the new memory location, likely using a direct memory access (DMA) mechanism. Such operations are time consuming and can slow down the process.

An alternative is that each event data slice stores all information contained in the plurality of event frames it may contain. This can be achieved by storing and manipulating pointers to the underlying data structures of the event frame in the event data slice instead of actually copying the data into the event data slice. For instance, there is a pointer for beginning and end of the event data slice in the event frame that represents only a portion of the event frame. This solution advantageously avoids unnecessary copies that would otherwise slow down the processor 1, in what could be considered as a zero-copy technique, as known by a person skilled in the art.

Preferably, the event data slice contains a vector comprising a plurality of event frames, for instance, for each event frame, the identifier, the event data, the capacity and the size of the event frame. Then, using the unique identifier associated to each event frame, the processor 1 can identify each event frame contained in the event data slice.

The event data slice Eds may be formatted by the processor 1 so that it comprises an index as a slice indicator. The index starts at zero and is incremented by the processor 1 each time a new event data slice is generated. Since one event data slice is created for each frame or batch of frame, the frame counter should grow evenly with the index of the event data slice.

The event data slice Eds may be formatted so that it comprises a start offset and an end offset.

Alternatively, or in combination, the event data slice Eds comprises a slice timestamp as a slice indicator. The slice timestamp may correspond to the start of acquisition of the associated frame from the frame-based sensor 3, or the start of exposure or start of integration of the associated frame.

Alternatively, or in combination, the event data slice Eds comprises an event timestamp as a slice indicator. The event timestamp may correspond to the timestamp of a specific event in the event data slice, typically the first trigger event.

Then, the start offset can correspond to the first trigger event in the first event frame, and the end offset correspond to the event prior to the next trigger event in the last event frame stored in the event data slice. The start offset may be referred to as "start index" and the end offset as "end index". The start offset and the end offset are byte offsets to the trigger events in the first and last underlying event frames, respectively.

The number of trigger events in each event frame depends on the ratio between frame rate of the event-based sensor 2 and the operative frequency or frame rate of the frame-based sensor 3, that is between the operative period and the arbitrary frame period.

For instance, in an embodiment where the processor 1 operates in LFR mode, the operative period of the frame-based sensor 3, typically comprised between 1ms and 100ms, may be 33ms, which corresponds to an operative frequency of 30fps. The arbitrary frame period may be greater than the operative period, such that more than one trigger event occurs in the arbitrary frame period. Typically, the arbitrary frame period can be comprised between 40ms and 60ms, and is preferably equal to 53ms, which means that the event-based sensor 2 transmits event frames at a frame rate close to 18.8fps.

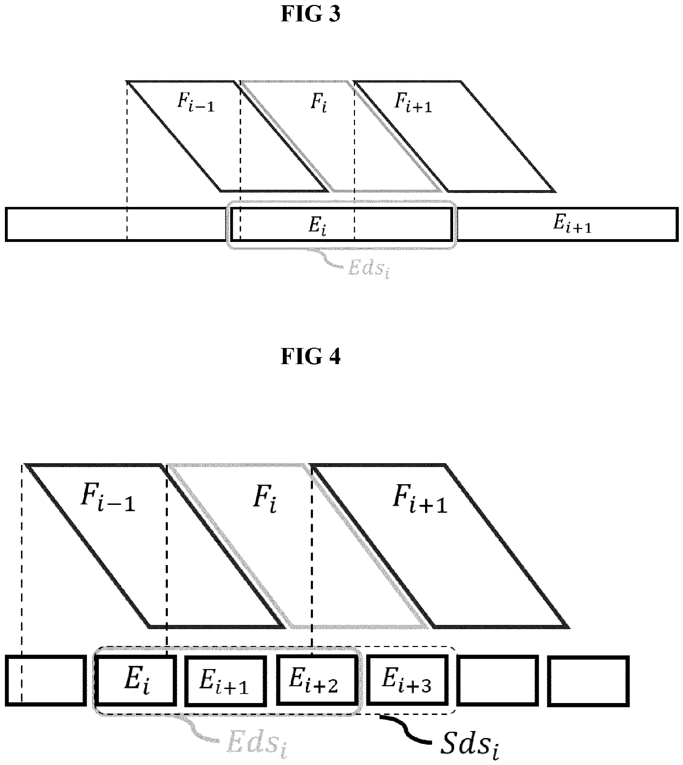

In this embodiment, there would be on average 1,6 trigger events in each frame, meaning that some event frames might contain two trigger events and some event frames might contain only one trigger event. This is illustrated in Figure 3.

The synchronization method may rely solely on the timestamps of the trigger events in the event data stream and on the frame counter transmitted by the frame-based sensor 3 to perform the data stream synchronization and the decomposition of the event data stream.

In this embodiment, upon receiving an event frame, the processor 1 decodes the timestamps of the trigger events in the event frame to generate the event data slice Eds.

Preferably, the events contained in the event frame are skipped and not decoded. It advantageously speeds up the slicing process, that is the generation of event data slices Eds.

Preferably, when the processor 1 decodes the first trigger event, it creates a new event data slice Eds and set its index to 0. The event timestamp of the event data slice can be set to the timestamp associated with the decoded first trigger event.

Then, the processor 1 may add the corresponding first event frame Eᵢ to the vector, or list, of event frames of the event data slice Edsᵢ. The processor 1 sets the start offset of the event data slice as the index of the first trigger event in the frame event Eᵢ. During the slicing, the event frames are not modified.

Then, the processor 1 continues decoding the event frame until finding the next trigger event. If the processor 1 reads all the events of the event frame containing the first trigger event without decoding the next trigger event, it starts decoding the next event frame and so on.

In this embodiment, all the event frames in-between the first trigger event and the next trigger event are added to the vector of event frames of the event data slice Eds in the order they are decoded. It advantageously avoids any duplication.

As will be seen later, decoding the event data slice Eds may start from start offset in the first event frame in the vector, then process any subsequent event frame in the vector, until the last event frame, where it stops at the last byte before the end offset in the last event frame. If there is a single event frame in the vector, then the start offset should be less than the end offset. If there are more than one event frames in the vector, then the start offset, and end offset are independent of each other.

For instance, if the next trigger event is in the same event frame Eᵢ as the first trigger event, the event data slice Edsᵢ contains only the event frame Eᵢ. This is illustrated in figure 3.

Alternatively, if the next trigger event is on the second event frame after the event frame Eᵢ containing the first trigger event (that is event frame Eᵢ₊₂), the event data slice Edsᵢ contains three event frames (Eᵢ, Eᵢ₊₁ and Eᵢ₊₂). This is illustrated in figure 4.

The processor 1 preferably then sets the end offset of the event data slice Eds to the index of the last event prior to the next trigger event in the last event frame that was added to the vector of event frames of the event data slice Eds. The 'index' of the event may correspond to the byte offset of the event in the event frame.

The processor 1 then creates and opens a new event data slice and proceeds as previously until all the received event frames have been processed.

Preferably, the processor 1 then waits for new event frames to arrive and repeats the decomposition step on its own computing thread.

During the synchronization method, the processor 1 builds a queue of event data slices Qe and a queue of frames Qf from the frame-based sensor. Typically, the queues are of FIFO type, that is the first data to come in is the first data to go out.

The processor 1 may perform a continuity check upon the storing step. Preferably, the frame-based sensor 3 comprises a frame counter, whose value is incremented at each frame generation by the frame-based sensor 3. The continuity check on the frame counter value can be performed by the processor 1 upon storing a new frame in the queue of frames Qf, based on a comparison between the frame indicator of the new frame and the frame indicator of the last frame inserted in the queue of frames Qf, that is the most recently inserted frame in the queue Qf.

For instance, in an embodiment where the processor 1 operates the frame-based sensor 3 in the LFR mode, the processor 1 reads the metadata associated with each frame Fᵢ, and checks, for each two consecutive frames received whether their respective frame counter values are contiguous.

Any jumps in the frame counter value means that at least one frame has been lost. The actual number of frames lost corresponds to the difference between the respective frame counter values of the two consecutive frames minus one.

For instance, in an embodiment where the processor 1 operates the frame-based sensor 3 in the HFR mode, the processor 1 may read the metadata associated to each batch of frames, and checks, for each two consecutive batches received, whether the difference in the frame counter value of two successive batches corresponds to the batch size.

If the difference between the respective frame counter values of two successive batches of frames is larger than the batch size, the number of frames dropped is obtained by subtracting the batch size from the difference between the respective frame counter values.

The processor may communicate with an application 10. The application 10 can provide information to an external user, using a display device for instance. The application 10 corresponds to a software program that runs on the processor 1. It can be a data fusion application that receives the data from both the frame and event data streams and computes a deblurred image, for instance.

Preferably, the method further comprises a warning step wherein the processor 1 sends a notification to the application 10 if the continuity check identifies a frame loss. For instance, in case the processor 1 detects that a frame loss occurred, the processor 1 sends a notification to the application informing about the frame loss and giving the number of lost frames.

Similarly, the processor 1 may perform a continuity check for the event data slices Eds. For instance, upon performing the slicing, the processor 1 computes the difference between the respective timestamps of two consecutive event data slices. Then the processor 1 divides the timestamp difference by the operative period to compute an intermediate value. Then the processor 1 rounds the intermediate value to the nearest integer and subtract one. The resulting value corresponds to the number of event data slices that were lost.

A continuity check may also be performed on the event data slices in the queue of event data slices Qe. Preferably, the method comprises a step of comparison of the respective slice indicator of a first and a second event data slice Eds from the queue of event data slices. Based on the comparison, the processor 1 then removes, or not, the first event data slice from the queue of data event slices Qe.

Preferably, in case the processor 1 detects that an event data slice Eds loss occurred, the slice indicator of the event data slice loss and the number of lost event data slices are notified to the application 10.

### Synchronization of event data slice and frames from frame-based sensor

The next step of the synchronization method is generating a synced data slice comprising the frame and the event information identifying all event data slices comprising events generated during acquisition of the frame. This is done by comparing the frame indicator and the respective slice indicators of event data slices.

Preferably, the event information comprises pointers to a start event and an end event of the respective event data slices comprising events generated during acquisition of the frame. Similarly, the synced data slice may comprise the event data slice with pointers to all events which occurred between two trigger events, and the frame, that is metadata and data.

Alternatively, the event information may be a hard copy of the events in the event data slice Eds.

More precisely, the event data slices Eds from the event-based sensor 2 and the frames from the frame-based sensor 3 stored in their respective queues Qe, Qf are processed by the processor 1 to output a synced data slice Sds.

There is a correspondence one to one, between one event data slice Edsᵢ, containing all events between two trigger events, and one frame Fᵢ from the frame-based sensor 3.

Preferably, the synchronization method comprises an initialization step.

For instance, if the frame-based sensor 3 comprises a frame counter, when the frame-based sensor transmits a first frame associated with the frame counter value, the initialization step may be to remove a number N of event data slices from the event data slices queue Qe equal to the first received frame counter value. This is done in a step S3.

It is observed that at a beginning of operation, some frames of the frame-based sensor 3 might not arrive to the processor 1 upon starting the frame-based sensor 3, effectively meaning that frames are lost. For instance, more than twenty frames, typically 28 frames, can be lost upon initialization. To take this into consideration, the first event data slices corresponding to the lost frame-based frames may be skipped.

More precisely, the frame counter f_{cnt} of the frame from the frame-based sensor 3 that is first received by the processor 1 is stored. Then, as each event data slice Edsᵢ corresponds to a frame Fᵢ from the frame-based sensor 3, the same number f_{cnt} of event data slices are skipped. More specifically, the first f_{cnt} event data slices are removed from the queue of event data slices Qe.

Preferably, upon generating a synced data slice Sds, a step of removing a frame from the queue of frames Qf or an event data slice from the queue of event data slices Qe, based on the comparison between the frame indicator of the frame and the slice indicator of the event data slice.

In the following, we call head frame the first frame of the queue of frames Qf, and head event data slice the first frame of the queue of event data slices Qe. The queues are typically of FIFO type ("first in first out").

In an embodiment wherein the frame indicator corresponds to a timestamp generated by the frame-based sensor 3, the synchronization method may comprise the steps of:
- computing a time difference between the timestamp of the head frame and the event timestamp of the head event data slice to obtain a head offset value;
- computing a difference value representative of a time difference between an offset reference value and the head offset value;
- if the difference value is positive and greater than a time margin, removing the head event data slice from the queue of event data slices Qe;
- if the difference value is negative and less than a time margin, removing the head frame from the queue of frames Qf;- else, generating a new synced data slice from the head frame and the head event data slice and removing said head frame and head event data slice from the frame queue Qf and queue of event data slices Qe, respectively.

Note that in the real world, the trigger event occurs at the same time than the start of exposure of the associated frame. However, since the timestamp from the frame-based sensor 3 is measured using a different time base than the timestamp for the trigger event generated by the event-based sensor 2, their numerical value can be different. The above difference value corresponds to this difference between the sensors time bases.

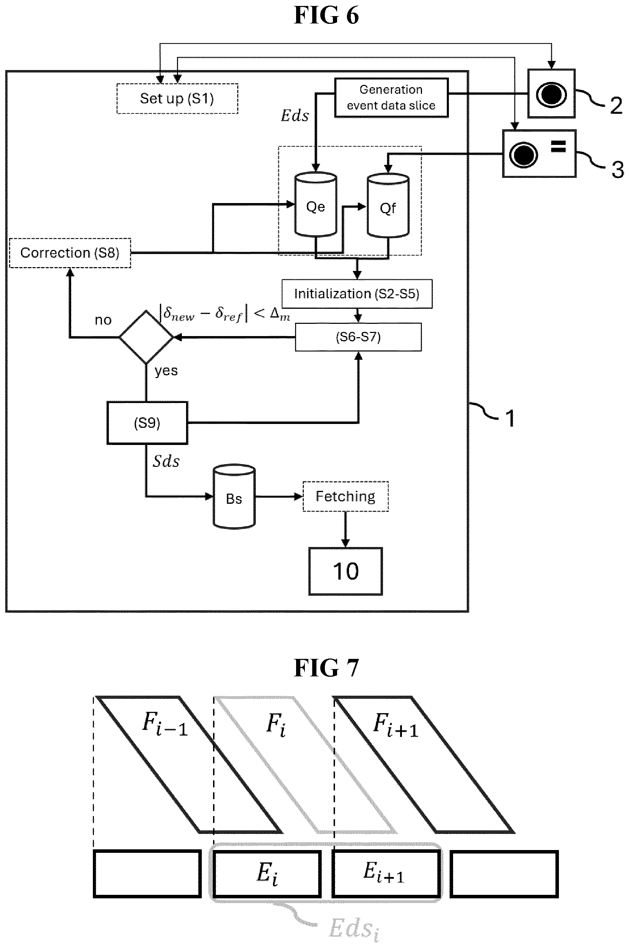

A detailed example of generation of a synced data slice Sds by the processor 1 in this embodiment is given as follows and illustrated in figures 5 and 6. The different steps of the method illustrated in figure 5 may be implemented by different functions or modules inside the processor 1, as illustrated schematically in figure 6.

During a step S4, an initial offset reference *δ_{ref} = t_{fb}*(0) - *t_{eb}*(*0*) is established between the data streams from the frame-based sensor 3 and the event-based sensor 2. The initial offset reference *δ_{ref}* may be the difference between the timestamp of the first frame F₁ received by the processor 1, *t_{fb}*(*0*), and the event timestamp of the first generated event data slice Eds₁, *t_{eb}*(*0*), which corresponds to the timestamp of the trigger event that opened the first event data slice Eds₁.

The first received frame F₁ and the first event data slice Eds₁ are popped from their respective queues to generate a first synced data slice Sds₁ in a step S5.

Preferably, the synced data slice Sds₁ is then stored into a buffer of synced data slices Bs. Upon generation, each synced data slice Sds is preferably given a synced slide indicator corresponding to the associated frame indicator or slice indicator. For instance, the synced slice indicator corresponds to an index and a timestamp corresponding to the associated frame counter and timestamp, respectively.

Then, the processor 1 fetches the next frame Fi and event data slice Edsi from their respective queues in a step S6. Upon synchronizing a new pair of event data slice Edsᵢ and frame Fᵢ from their respective queues, the processor 1 computes a new offset *δ_{new} = t_{fb}*(*i*) - *t_{eb}*(*i*) that corresponds to the difference between their timestamps in a step S7, assuming there is no misalignment due to a frame drop. The new offset *δ_{new}* is compared with the initial offset reference *δ_{ref},* that is the processor 1 computes the difference between the new offset *δ_{new}* and the initial offset reference *δ_{ref}.*

The computed difference should be small compared to the operative period or frame period and only allow for some jitter in the order of a time margin Δ*ₘ*. Typically, the time margin Δ*ₘ* can be 100µs.

Preferably, the method further comprises updating the offset reference value to the head offset value upon generation of the new synced data slice Sds. For instance, if the absolute value |*δ_{new}* - *δ_{ref}*| of the computed difference value is less than the time margin Δ*ₘ*, then the initial offset reference *δ_{ref}* is updated and replaced by the new offset *δ_{new},* so that in the next iteration the value of the initial offset reference *δ_{ref}* is the new offset *δ_{new}* .

The synchronization is maintained, and the processor 1 generates a new synced data slice Sds that is put into the buffer of synced data slices Bs. Note that, while the event-data slice Eds covers only events between one trigger period, the synced data slice Sds should cover events between two trigger periods. In reference to figure 4, the event data slice Edsᵢ only covers the beginning of exposure of the frame Fᵢ, while the synced data slice Sdsᵢ covers the whole exposure of frame Fᵢ, and therefore contains events from the event frame Eᵢ₊₃.

If the absolute value of the computed difference value is greater than the time margin Δ*ₘ*, it means at least one frame has been lost. In other words, the frame stream from the frame-based sensor 3 is now ahead of the event data stream.

The synchronization method may comprise a correction step S8. Preferably, upon generation of the synced data slice, a step of removing a frame F from the queue of frames Qf or an event data slice Eds from the queue of event data slices Qe, based on the comparison between the frame indicator of the frame and the slice indicator of the event data slice.

For instance, in case the difference *δ_{new}* - *δ_{ref}* is higher than the time margin *δ_{new}* - *δ_{ref} >* Δ*ₘ*, it means at least one frame was lost. The processor 1 computes the expected timestamp *t_{eb}* of the event data slice Eds that corresponds to the timestamp *t_{fb}* of the frame with the time base of the frame-based sensor 3. The expected timestamp corresponds to the difference between the timestamp of the frame and the offset reference *t_{eb} = t_{fb}* - *δ_{ref}.*

The processor 1 subtracts the time margin to the expected timestamp to obtain a tolerated timestamp margin. Then, the processor 1 drops from the queue Qe all the event data slices with an event timestamp less than the tolerated timestamp margin *t_{eb}* - Δ*ₜₘ,* with for instance Δ*ₜₘ* = Δ*ₘ* = 100 µ*s*.

On the other hand, if the difference is lower than the opposite of the time margin, *δ_{new}* - *δ_{ref} <* -Δ*ₘ* it means at least one event data slice was lost. It further means that the event data stream is in advance with respect to the frame data stream. The processor 1 computes the expected frame timestamp *t_{fb}* that corresponds to the event data slice timestamp *t_{eb}* generated by the time base of the event-based sensor 2 as follows *t_{fb} = t_{eb}* + *δ_{ref}.* The processor 1 then drops all frames whose initial timestamp is lower than *t_{fb}* - Δ*ₜₘ*, from the queue of frames Qf.

Preferably, in an embodiment wherein the processor 1 communicates with the application 10, the method further comprises a warning step of:
- sending a notification to the application 10, each time an event data slice is removed from the queue of event data slices Qe;
- sending a notification to the application 10, each time a frame is removed from the queue of frames Qf.

Eventually, if any event data slice Eds or frame is dropped, a notification is sent to the application 10, comprising the number of dropped event data slices and/or frames.

The processor 1 then generates the synced data slice Sdsi and push it in the buffer of synced data slice Bs (step S9). The synchronization step is then iterated.

In an embodiment where the processor 1 operates the frame-based sensor 3 in HFR mode, the same synchronization method can be applied. In this embodiment, since the frames are transmitted by batches, and that the frame indicator, for instance timestamp, of the batch corresponds to the frame indicator of the first frame of the batch, the comparison between the slice indicator, for instance event timestamp, of the event data slice Eds and the frame indicator of the frame can only be done for the first frame of the batch.

Supposedly, if the frame indicator, typically the timestamp, of the batch is aligned with the slice indicator, typically the event timestamp, of the event data slice, then all the frames in the batch are considered to be aligned with the following event data slices. In case a correction step is required, because a misalignment has been detected, then the whole batch is discarded, and the processor 1 realigns the dropped event data slices so as to synchronize the slice indicator with the frame indicator of the next batch.

Preferably, the buffer of synced data slices Bs is a ring buffer with a given maximum capacity. The synced data slice ring buffer stores the synced data slices Sds, comprising the event data slices Eds and the frames F from the frame-based sensor that correspond to each other. Upon insertion of a new synced data slice, if the maximum capacity would be exceeded, the oldest synced data slice is removed prior to insertion of the new synced data slice. In other words, when a new synchronized data slice is pushed in the synced data slice ring buffer, it is automatically overwritten such that the oldest synchronized data slice that exceeds the capacity of the synced data slice ring buffer is discarded. This allows to free the associated resources and limit the maximum number of synced data slices in memory according to the size of the synced data slice ring buffer. The past synced data slices are kept over a certain time history.

Preferably, the application 10 can request a particular synced data slice Sds given timestamp *tᵢ*. The given timestamp *tᵢ* might be in the past, but should not exceed the time history corresponding to the synced event data slices stored in the buffer of synced data slices Bs. The proposed method may further comprise a fetching step.

In an embodiment where each synced data slice Sds is associated with a timestamp that corresponds to a start of acquisition, and where the frame-based sensor 3 generates frames comprising a number h of lines, each line being acquired during a row exposure time and delayed by the row skew time *δᵣₛₛ* from the previous line, fetching a timed synced data slice can comprise the steps of:
- computing, for the timed synced data slice Sds, an expected end of frame acquisition from the start of acquisition, the number of lines, the row exposure time *δᵣₑₓₚ* and the row skew time *δᵣₛₛ*;
- searching in the buffer Bs a next synced data slice corresponding to the first synced data slice associated with a timestamp greater than the expected end of frame acquisition;
- if the next synced data slice is found, creating a set of synced data slices comprising the timed synced data slice and the synced data slices anterior to the next synced data slice.

For instance, the synced data slices Sds stored into the buffer of synced data slices Bs only comprise pointers to the events acquired during the frame acquisition.

Preferably, the corresponding synced data slice Sds is located in the synced data slice ring buffer.

A detailed example of fetching is described hereinafter.

The processor 1 browses the buffer of synced data slices Bs and decodes the timestamps of the synced data slices until it finds a synced data slice associated with a timestamp smaller or equal to the given timestamp *t.* Then, the processor retrieves the index *i* and timestamp *tᵢ* of the synced data slice Sdsᵢ and fetches the corresponding event data slice Eds and frame F in their respective queues.

During fetching, the processor 1 may provide the application 10 with a copy of the synced data slice containing the events and the frame data or pointers to such data, including the metadata of the frame.

Preferably, if the processor 1 browses all the buffer of synced data slices Bs without finding such a synced data slice Sds, an error message is sent to the application 10.

In an embodiment where the frame-based sensor 3 is of rolling-shutter type, the fetching step might comprise a further control step. The control step helps ensuring that all event data necessary to cover the entire frame exposure period are present in the given synced data slice Sdsᵢ.

First, the processor 1 computes the end of frame acquisition time *t_{end},* associated with the frame start of acquisition or timestamp *tₛₜₐᵣₜ.* It is obtained by adding to the timestamp of the frame, the row exposure time *Sᵣₑₓₚ,* h-1 times the rolling-shutter skew *δᵣₛₛ*, where h is the height of the frame-based sensor 3 expressed in number of lines or rows: *t_{end} = tₛₜₐᵣₜ + δᵣₑₓₚ* + (*h* - 1) × *δᵣₛₛ.*

After computation of the end of frame acquisition time *t_{end}* for the given synced data slice *Sdsᵢ,* the processor 1 browses the buffer of synced data slices Bs and search for the first synced data slice whose timestamp *tⱼ* is beyond the desired end of frame acquisition time: *tⱼ > t_{end}*.

In case the synced data slice is not found into the buffer of synced data slices, the processor 1 may wait for a given timeout period *δ*ₒ*ᵤₜ.* If no such synced data slice with *tⱼ* > *t_{end}* arrives within the timeout period *δₒᵤₜ*, an error is preferably returned to the application 10. If such synced data slice is found, considering its index *j*, the processor 1 creates a set of synced data slices S comprising synced data slices with indices ranging from *i* to *j* - 1, so that it selects all synced data slices whose timestamp is between the start of exposure time *tₛₜₐᵣₜ* and the end of exposure time *t_{end}* for the associated frame. A set of synced data slices S corresponding to all events occurring during the exposure period is obtained.

The control step is interesting since before synchronization, the exact matching between frames and event data slices cannot be exactly known. Therefore, the end of frame acquisition time *t_{end}* cannot be computed beforehand but can be computed after decoding the metadata associated with the frame.

Preferably, the processor 1 checks that there is a continuity in the synced slice indicators, typically a continuity check on the indices or timestamps, of the synced data slices Sds in the set of synced data slices S. If not, an error may be reported to the application 10.

Preferably, the synchronization method comprises a cloning step. In the cloning step, each event data slice Eds in the set of synced data slices S is cloned. More precisely, the cloned slice contains all the pointers to the event data slices Eds. The end pointer of the cloned slice is updated to the pointer of the last of the synced data slice contained in the set of synced data slices S. Using only references to the received event frame, event data copy is then avoided. The pointers can be kept to the start event and end event for a given event data slice Eds.

The cloned slice is then sent to the application 10.

### First alternative embodiment

We describe another embodiment of the proposed synchronization method. It may comprise the steps presented previously. Only the differences with the previously described method will be given. In particular, set up and initialization of the system, generation of event data slices and fetching a timed synced data slice can be done similarly.

In this embodiment, a trigger counter for the external trigger events is added in the event-based sensor 2. In other words, the event-based sensor 2 comprises the trigger counter whose value is incremented each time the pulse is detected on the trigger input pin, the slice indicator corresponding to an index computed from the trigger counter.

The frame-based sensor 3 comprises a frame counter whose frame counter value is incremented at each frame generation by the frame-based sensor, and the frame indicator corresponding to the frame counter value. Using a frame counter incremented by the frame-based sensor 3 is more reliable with regard to data drop by the processor 10. Alternatively, the frame counter can be implemented by the processor 10.

Each time the event-based sensor 2 issues a trigger event from the trigger input pin 21, the event-based sensor 2 sends the value of the trigger counter in the trigger event encoded in the event data stream and increment the value of the trigger counter for the trigger input pin 21.

In addition to the previous connection step, wherein the synchronizing pin 31 of the frame-based sensor 3 is connected to the trigger input pin 21 of the event-based sensor 2, the trigger counter, which counts the transitions of the synchronizing pin 31, is transmitted in the event data stream from the event-based sensor 2.

The trigger counter can be correlated to the frame counter of the frame-based sensor 3 to synchronize the event data slices Eds. Therefore, there is no need to operate a timestamp comparison during the generation of the synced data slices Sds. In this embodiment, the step of generating the synced data slice Sds is based on a comparison between the index and the frame counter value.

More specifically, the encoding format of the event frames E now comprises the trigger counter. Some of the previously unused or reserved bits can be used to encode a 7-bit counter that is incremented when a trigger event is issued.

In an embodiment where the event-based sensor 2 monitors a plurality of trigger input pins 21, each trigger input pin 21 is preferably associated with a trigger counter, which is incremented independently for each trigger input pin 21 every time that a trigger event is issued from the respective trigger input pin.

In this embodiment, during the step of decomposition of the event data stream, the index of the event data slice Eds can be computed from the value of the trigger counter.

For instance, as the value of the trigger counter starts at 0 for the first rising edge of a XVS signal emitted by the synchronizing pin 31, and is incremented every time the XVS signal changes polarity, following a rising edge and a falling edge, the increment of the trigger counter between two consecutive rising edges of the XVS signal indicating the start of acquisition *tₛₜₐᵣₜ* of the frame-based sensor 3 is of two. So, to determine the index of the event data slice, the processor 1 divides the trigger counter of the rising edge by two.

As the index of the event data slice Eds is computed directly from the event data stream and is updated even in case of data loss, it can be reliably used to synchronize the data streams from the event-based sensor 2 and the frame-based sensor 3.

In this embodiment, the generation of the synced data slice Sds can be achieved following the steps of :
- pulling a head frame and a head event data slice from the respective queues Qf, Qe;
- comparing the index of the head event data slice and the frame counter value of the head frame;
- if the index and the frame counter value are equal, generating a new synced data slice from the frame and the event data slice;
- if the index is greater than the frame counter value, removing the head frame from the queue of frames;
- if the frame counter value is greater than the index, removing the head event data slice from the queue of event data slices.

In other words, the processor 1 compares the index of the head of the queue of event data slices Qe and the frame counter of the head of the queue of frames Qf.

If they are equal, then synchronization is achieved and a new synced data slice is built comprising the head event data slice and the head frame, and both are popped from their respective queues Qe, Qf. The iterative process is then repeated with the next event data slice and frame in the head of their respective queues.

If the index of the head event data slice and the frame counter of the head frame do not match, the processor 1 selects the largest value as a reference value, such that the other data stream, associated with the lowest value, is behind.

The processor 1 drops the head of the queue for the data stream that is behind until it obtains the next element that has a value greater or equal to the reference value. If the values do not match, then again, one of the data streams is considered to be ahead of the other, and the dropping process is iterated until the values match.

If the values match, then the data streams can now be considered synchronized.

Preferably, the processor 1 notifies the application 10 that a certain number of event data slices Eds or frames F have been dropped.

The processor 1 pops the event data slice Eds and frame F with the matching slice indicator and frame indicator, typically a matching index and frame counter, respectively, builds a synced data slice Sds and pushes it into the buffer of synced data slices Bs.

Preferably, in an embodiment where the buffer of synced data slices Bs is a ring buffer, if the capacity of the ring buffer is exceeded, then the oldest synced data slice is removed until the capacity of the synced data slice ring buffer is within the maximum capacity. The iterative process is then repeated with the next event data slice and frame in the head of their respective queues.

### Second alternative embodiment

We describe herein another embodiment of the proposed synchronization method. It may comprise the steps presented previously. Only the differences with the previously described method will be given. In particular, set up and initialization of the system, synchronization and fetching a timed synced data slice can be done similarly.

In this embodiment, the event-based sensor 2 is improved so that it can generate MIPI CSI2 event frames that are aligned at the rising edge of the trigger input pin 21. More precisely, the triggers are inserted by the read-out on the event stream inside the event-based sensor 2 at the appropriate timestamp where the input pin 21 detects a rising edge of the synchronization signal. The event-based sensor 2 may comprise a MIPI CSI2 TX controller, configured to monitor the event stream at the output of the event-based sensor 2. For instance, the MIPI CSI2 TX controller can initially discard all data until reception of the first trigger. Upon finding a trigger corresponding to a rising edge of the synchronization signal, the MIPI CSI2 TX controller can close and flush any eventual previous event frame, then start a new event frame including the trigger associated with the synchronization signal as the first event in the new event frame. Long packets can be transmitted to the processor 1 when they are full. The current event frame is closed by the MIPI CSI2 TX controller at the next trigger, and the MIPI CSI2 TX controller opens a new frame, as long as the event-based sensor 2 is in operation.

Preferably, a metadata header is added to each of the MIPI CSI2 event frames containing, among other information, a frame counter and a timestamp. Unlike in the previous embodiments, there can only be one rising edge trigger from the synchronizing pin 31 per frame, and the MIPI CSI2 event frame now starts when the trigger input pin 21 receives the pulse from the synchronizing pin 31.

As illustrated in figure 7, the MIPI event frame Eᵢ is pre-aligned by the event-based sensor 2 with the rising edge of the synchronizing pin 31, that is with the start of acquisition of the frame Fᵢ.

Since the slice timestamp and the event timestamp are equal, the MIPI CSI2 event frame may be associated with one single timestamp.

Therefore, the event-based sensor 2 intrinsically performs the decomposition step, so the downstream processor 1 does not slice the event frames E. In other words, there is no need for decomposing the event data stream into event data slices. The event data slices are directly built from the MIPI CSI2 event frames. It is also not required to decode the event data stream from the event-based sensor 2 altogether for synchronization purposes.

During the generation of the synced data slice Sds, the synced slice indicator can be directly taken from the MIPI CSI2 information. For instance, the index and timestamp of the synced data slice Sds can be directly taken from the frame counter and timestamp, respectively, in the metadata section of the MIPI CSI2 event frame.

Another aspect of the present invention concerns a non-transitory computer-readable medium comprising instructions stored thereon which, when executed by the system, cause the computer to carry out the steps of the method described previously.

While the present invention has been described with respect to certain preferred embodiments, it is obvious that it is in no way limited thereto and it comprises all the technical equivalents of the means described and their combinations. In particular, it will be apparent to those skilled in the art that various changes and modifications may be made without departing from the scope of the invention.

## Claims

1. A method for synchronization of a frame-based sensor (3) and an event-based sensor (2), implemented by a processor (1) configured to receive a frame stream from the frame-based sensor (3) and an event data stream from the event-based sensor (2), the event data stream comprising events generated each time the event-based sensor (2) detects a change in light intensity, wherein the frame-based sensor (3) comprises a synchronizing pin (31) configured to emit a pulse at a start of acquisition of each frame of the frame stream, and wherein the event-based sensor (2) comprises a trigger input pin (21) connected to the synchronizing pin (31), wherein the event-based sensor (2) is configured to detect the pulse emitted by the synchronizing pin (31) on the trigger input pin (21), and to insert an associated trigger event in the event data stream in response to the detection of the pulse, the method comprising the steps of:
- storing frames from the frame-based sensor in a queue of frames (Qf), a frame being **characterized by** a frame indicator reflecting an order of the frame in the frame stream,
- storing event data slices (Eds) in a queue of event data slices (Qe), an event data slice (Eds) comprising events from the event data stream generated during a time interval between two successive trigger events and a slice indicator reflecting an order of the event data slice (Eds) in the event data stream,
- for each frame of the queue of frames (Qf), generating a synced data slice (Sds) comprising the frame and event information identifying all event data slices (Eds) comprising events generated during acquisition of the frame, by comparing the frame indicator and the respective slice indicators of event data slices (Eds).

2. The method of claim 1, wherein the frame indicator is generated by the processor (1) and added to the frame as a metadata of the frame, before storing the frame in the queue of frames (Qf).

3. The method of any one of claims 1 and 2, wherein the event information comprises pointers to a start event and an end event of the respective event data slices (Eds) comprising events generated during acquisition of the frame.

4. The method of any one of claims 1 to 3, further comprising a step of decomposition of the event data stream into a plurality of event data slices (Eds), the decomposition being implemented by the processor (1).

5. The method of any one of claims 1 to 4, wherein the frame-based sensor (3) comprises a frame counter, whose frame counter value is incremented at each frame generation by the frame-based sensor (3), the method further comprising a continuity check on the frame counter value upon storing a new frame in the queue of frames (Qf), based on a comparison between the frame indicator of the new frame and the frame indicator of a last frame from the queue of frames (Qf).

6. The method of claim 5, wherein the processor (1) communicates with an application (10), the method further comprising a warning step of:
- sending a notification to the application (10) if the continuity check identifies a frame loss.

7. The method of any one of claims 1 to 6, wherein the generated synced data slice (Sds) is stored in a buffer (Bs).

8. The method of any one of claims 1 to 7, wherein the frame-based sensor (3) is of rolling-shutter type.

9. The method of claim 8, wherein all generated synced data slices (Sds) are stored in a buffer (Bs), each synced data slice (Sds) is associated with a timestamp that corresponds to a start of acquisition, the frame-based sensor (3) generating frames comprising a number h of lines, each line being acquired during a row exposure time and delayed by a row skew time (δᵣₛₛ) from the previous line, and wherein the method further comprises fetching a timed synced data slice (Sds) by:
- computing, for the timed synced data slice (Sds), an expected end of frame acquisition from the start of acquisition, the row exposure time (*δᵣₑₓₚ*), the number of lines and the row skew time (δᵣₛₛ);
- searching in the buffer (Bs) a next synced data slice corresponding to the first synced data slice associated with a timestamp greater than the expected end of frame acquisition;
- if the next synced data slice is found, creating a set of synced data slices comprising the timed synced data slice (Sds) and the synced data slices anterior to the next synced data slice.

10. The method of any one of claims 1 to 9, wherein the frame-based sensor (3) comprises a frame counter whose frame counter value is incremented at each frame generation by the frame-based sensor (3) and the frame-based sensor (3) is configured to transmit a first frame associated with the frame counter value, the method further comprising an initialization step of:
- removing a number of event data slices (Eds) from the event data slices queue (Qe) equal to the frame counter value.

11. The method of any of claims 1 to 10, further comprising a step of comparison of the respective slice indicator of a first and a second event data slice (Eds) from the queue of event data slices (Qe), and removing, or not, the first event data slice from the queue of data event slices (Qe), based on the comparison.

12. The method of any of claims 1 to 11, further comprising, upon generation of the synced data slice (Sds), a step of removing a frame from the queue of frames (Qf) or removing an event data slice (Eds) from the queue of event data slices (Qe), based on the comparison between the frame indicator of the frame and the slice indicator of the event data slice (Eds).

13. The method of any one of claims 1 to 12, wherein the processor (1) communicates with an application (10), the method further comprising a warning step of:
- sending a notification to the application (10), each time an event data slice (Eds) is removed from the queue of data event slices (Qe);
- sending a notification to the application, each time a frame is removed from the queue of frames (Qf).

14. The method of any one of claims 1 to 13, wherein the event data stream is decomposed by the event-based sensor (2) into event frames comprising events generated during an arbitrary frame period, each event being associated with a timestamp, the method further comprising a generation of event data slices (Eds) from at least a first event frame with a first event, by the processor (1), and wherein the slice indicator corresponds to an event timestamp corresponding to the timestamp of the first event of the first event frame.

15. The method of claim 14, wherein the frame indicator corresponds to a timestamp generated by the frame-based sensor (3), the queue of frames (Qf) comprises a head frame and the queue of event data slices (Qe) comprises a head event data slice, the method comprising the steps of:
- computing a time difference between the timestamp of the head frame and the event timestamp of the head event data slice to obtain a head offset value;
- computing a difference value representative of a time difference between an offset reference value and the head offset value;
- if the difference value is positive and greater than a time margin, removing the head event data slice from the queue of event data slices (Qe);
- if the difference value is negative and less than a time margin, removing the head frame from the queue of frames (Qf);
- else, generating a new synced data slice from the head frame and the head event data slice, and removing the said head frame and head event data slice from the frame queue (Qf) and queue of event data slices (Qe), respectively.

16. The method of claim 15, comprising the step of:
- updating the offset reference value to the head offset value upon generation of the new synced data slice.

17. The method of any one of claims 1 to 16, wherein the frame-based sensor (3) comprises a frame counter whose frame counter value is incremented at each frame generation by the frame-based sensor, and wherein the event-based sensor (2) comprises a trigger counter whose value is incremented each time the pulse is detected on the trigger input pin, the slice indicator corresponding to an index computed from the trigger counter and the frame indicator corresponding to the frame counter value, the step of generating the synced data slice being based on a comparison between the index and the frame counter value.

18. The method of claim 17, comprising the steps of:
- pulling a head frame and a head event data slice from the respective queues (Qf, Qe);
- comparing the index of the head event data slice and the frame counter value of the head frame;
- if the index and the frame counter value are equal, generating a new synced data slice from the frame and the event data slice;
- if the index is greater than the frame counter value, removing the head frame from the queue of frames;
- if the frame counter value is greater than the index, removing the head event data slice from the queue of event data slices.

19. The method of any one of claims 1 to 18, wherein the event-based sensor (2) is configured according to a MIPI CSI2 protocol, such that event data slices (Eds) are generated from the event data stream by the event-based sensor (2) before transmission to the processor (1).

20. System comprising a frame-based sensor (3), an event-based sensor (2), and a processor (1), wherein the processor (1) is configured to implement the method from any one of claims 1 to 19 for synchronization of the frame-based sensor (3) and the event-based sensor (2).

21. A non-transitory computer-readable medium comprising instructions stored thereon which, when executed by the system of claim 20, cause the computer to carry out the steps of the method of any one of claims 1 to 19.
